# EUROPEAN PATENT APPLICATION

(11) **EP 3 702 029 A1**
(43) Date of publication of application: **02.09.2020**
(21) Application number: 19159649.3
(22) Date of filing: 27.02.2019
(51) Int. Cl.: B01J 29/76, B01J 29/072, B01J 29/86, B01J 29/87, B01J 35/00, B01J 37/18, B01D 53/94, B01J 23/835, B01J 35/02

(54) **TERNARY INTERMETALLIC COMPOUND CATALYST SUPPORTED ON ZEOLITE**

(71) Applicant: BASF SE, 67056 Ludwigshafen am Rhein (DE)
(72) Inventor: ERNST, Stefan, 67663 Kaiserslautern (DE); BRAUNSMANN, Kirsten, 67056 Ludwigshafen (DE); MUELLER, Ulrich, 67056 Ludwigshafen (DE); TRUKHAN, Natalia, 67056 Ludwigshafen (DE); WERNER, Matthias, 67056 Ludwigshafen (DE); WILHELM, Christian, 67663 Kaiserslautern (DE); SCHAUMLOEFFEL, Johannes, 67663 Kaiserslautern (DE); SCHREYER, Hannah, 67056 Ludwigshafen (DE)
(74) Representative: Altmann Stößel Dick Patentanwälte PartG mbB

(57) **Abstract**

The present invention relates to a catalyst comprising particles of a ternary intermetallic compound of the following formula (I):

CuNiₐZ_{b} (I)

wherein 0 < a ≤ 2, and 0 < b ≤ 1, and wherein Z is selected from the group consisting of Al, Si, Ga, Ge, In, Sn, and Sb, including mixtures of two or more thereof;
wherein at least part of the particles comprise two or more phases, wherein one of the phases has the composition according to the following formula (II)

CuₓNi_{y}Z_{z} (II)

wherein x + y + z = 1, and
wherein x ranges from 0.06 to 0.8;
y ranges from 0.05 to 0.75; and
z ranges from 0.05 to 0.43;
wherein the particles of the ternary intermetallic compound are supported on a zeolitic material, as well as to a method for its preparation and to its use.

## Description

### TECHNICAL FIELD

The present invention relates to a catalyst comprising particles of a ternary intermetallic compound supported on a zeolitic material as well as to a method for its preparation. Furthermore, the present invention relates to a catalyst comprising particles of a ternary intermetallic compound supported on a zeolitic material as obtained from the inventive method, as well as to the use of the catalyst comprising particles of a ternary intermetallic compound supported on a zeolitic material per se or as obtained from the inventive process, in particular for the selective catalytic reduction of NOₓ.

### INTRODUCTION

Heusler phases are intermetallic compounds with X₂YZ composition. X and Y are transition metals (Co, Cu, Fe, Mn) and Z is a 3^{rd}/4^{rd} row main group element (Ge, Si, Al, Ga). Since their discovery, the main interest for said compounds mainly focused on ferromagnetic applications such as in spintronics, thermoelectrics, and giant magnetoresistance. In particular, their catalytic properties were barely touched such as e.g. in Hedin et al. in Z physik. Chem. 1935, B30 280-288 which is a study on how changes in ferromagnetism may influence catalytic reactions such as the hydrogenation of carbon monoxide and ethylene over nickel and the oxidation of carbon monoxide to carbon dioxide over the Heusler alloy MnAlCu₂.

There has recently been an interest for the use of Heusler phases as a catalyst. Thus, Senanayake et al. "Exploring Heusler alloys as catalysts for ammonia dissociation", August 2016, ISBN: 978-1-369-00770-1, discloses activation energy of ammonia cracking on the surfaces of various compositions of Heusler alloys, like NiMnGa and CoCrGe. WO 2017/029165 A1, on the other hand, relates to ternary intermetallic compound catalysts supported on silica and on alumina, as well as to their use as a catalyst for a Knoevenagel condensation reaction. Same applies to WO 2018/16270 A1, which concerns ternary intermetallic compound catalysts, including two-phased Janus particles, supported on silica, and to their use as a catalyst for the hydrogenation of cinnamaldehyde, for the dehydration of propane, as well as in the Knoevenagel condensation reaction. WO 2018/16270 A1 further describes supporting specific Heusler phases on ZSM-5, yet does not indicate or suggest any use thereof as a catalyst.

Thus, although catalytic applications of Heusler phases have been recently investigated, their remains a need for new types of ternary intermetallic compound catalysts which may be used in both known and new catalytic applications.

### DETAILED DESCRIPTION

Accordingly, it was the object of the present invention to provide new ternary intermetallic compounds and new applications for said new compounds. Thus, it has quite surprisingly been found that when specific ternary intermetallic compounds are supported on a zeolitic material, catalysts are obtained which are highly effective in catalytic applications, in particular in the field of catalytic exhaust gas treatment with regard to the conversion of NOₓ in selective catalytic reduction.

Therefore, the present invention relates to a catalyst comprising particles of a ternary intermetallic compound of the following formula (I):

CuNiₐZ_{b} (I)

wherein 0 < a ≤ 2, and 0 < b ≤ 1, and wherein Z is selected from the group consisting of Al, Si, Ga, Ge, In, Sn, and Sb, including mixtures of two or more thereof;
wherein at least part of the particles comprise two or more phases, wherein one of the phases has the composition according to the following formula (II)

   CuₓNi_{y}Z_{z} (II)

   wherein x + y + z = 1, and
   wherein x ranges from 0.06 to 0.8;
   y ranges from 0.05 to 0.75; and
   z ranges from 0.05 to 0.43; and
   wherein the particles of the ternary intermetallic compound are supported on a zeolitic material.

According to the present invention, it is preferred that the composition of the phases is determined by EDX imaging, preferably by HAADF-STEM mapping and EDX imaging, and more preferably by simultaneous HAADF-STEM mapping and EDX imaging. There is no restriction as to the method according to which EDX imaging, HAADF-STEM mapping, or simultaneous HAADF-STEM mapping and EDX imaging are performed, wherein it is preferred that these are performed according to the methods described in the experimental section of the present application.

It is preferred according to the invention that Z is selected from the group consisting of Al, Si, Ga, In, and Sn, including mixtures of two or more thereof, preferably from the group consisting of Al, Si, Ga, and Sn, including mixtures of two or more thereof, more preferably from the group consisting of Al, Si, and Sn, including mixtures of two or more thereof, wherein more preferably Z is Al and/or Sn, preferably Sn.

Furthermore and independently thereof, it is preferred that a ranges from 0.05 to 2 and b ranges from 0.02 to 1, preferably wherein a ranges from 0.1 to 1.6 and b ranges from 0.05 to 0.8, more preferably wherein a ranges from 0.15 to 1.3 and b ranges from 0.07 to 0.6, more preferably wherein a ranges from 0.2 to 1 and b ranges from 0.1 to 0.5, more preferably wherein a ranges from 0.25 to 0.8 and b ranges from 0.13 to 0.4, more preferably wherein a ranges from 0.3 to 0.6 and b ranges from 0.15 to 0.3, more preferably wherein a ranges from 0.35 to 0.5 and b ranges from 0.17 to 0.25, more preferably wherein a ranges from 0.4 to 0.46 and b ranges from 0.19 to 0.23, and more preferably wherein a ranges from 0.42 to 0.44 and b ranges from 0.2 to 0.22.

Furthermore and independently thereof, it is preferred that x ranges from 0.1 to 0.7, y ranges from 0.12 to 0.7, and z ranges from 0.06 to 0.42, preferably wherein x ranges from 0.15 to 0.6, y ranges from 0.17 to 0.65, and z ranges from 0.09 to 0.37, more preferably wherein x ranges from 0.2 to 0.55, y ranges from 0.22 to 0.6, and z ranges from 0.12 to 0.34, more preferably wherein x ranges from 0.25 to 0.5, y ranges from 0.27 to 0.55, and z ranges from 0.15 to 0.31, more preferably wherein x ranges from 0.28 to 0.46, y ranges from 0.32 to 0.52, and z ranges from 0.17 to 0.29, more preferably wherein x ranges from 0.3 to 0.44, y ranges from 0.34 to 0.5, and z ranges from 0.19 to 0.27, more preferably wherein x ranges from 0.32 to 0.42, y ranges from 0.36 to 0.48, and z ranges from 0.2 to 0.26, more preferably wherein x ranges from 0.34 to 0.4, y ranges from 0.38 to 0.46, and z ranges from 0.21 to 0.25, and more preferably wherein x ranges from 0.35 to 0.37, y ranges from 0.4 to 0.44, and z ranges from 0.22 to 0.24.

According to the present invention it is preferred that a ranges from 0.1 to 2 and b ranges from 0.02 to 1, preferably wherein a ranges from 0.2 to 1.6 and b ranges from 0.05 to 0.8, more preferably wherein a ranges from 0.3 to 1.3 and b ranges from 0.07 to 0.6, more preferably wherein a ranges from 0.35 to 1 and b ranges from 0.1 to 0.5, more preferably wherein a ranges from 0.4 to 0.8 and b ranges from 0.13 to 0.4, more preferably wherein a ranges from 0.45 to 0.7 and b ranges from 0.15 to 0.3, more preferably wherein a ranges from 0.48 to 0.65 and b ranges from 0.17 to 0.25, more preferably wherein a ranges from 0.51 to 0.59 and b ranges from 0.19 to 0.23, and more preferably wherein a ranges from 0.53 to 0.57 and b ranges from 0.2 to 0.22.

Furthermore and independently thereof, it is preferred that x ranges from 0.06 to 0.5, y ranges from 0.3 to 0.75, and z ranges from 0.05 to 0.41, preferably wherein x ranges from 0.09 to 0.45, y ranges from 0.35 to 0.7, and z ranges from 0.08 to 0.36, more preferably wherein x ranges from 0.12 to 0.42, y ranges from 0.38 to 0.65, and z ranges from 0.11 to 0.33, more preferably wherein x ranges from 0.15 to 0.39, y ranges from 0.41 to 0.63, and z ranges from 0.14 to 0.3, more preferably wherein x ranges from 0.18 to 0.36, y ranges from 0.43 to 0.61, and z ranges from 0.16 to 0.29, more preferably wherein x ranges from 0.19 to 0.33, y ranges from 0.45 to 0.59, and z ranges from 0.18 to 0.28, more preferably wherein x ranges from 0.20 to 0.30, y ranges from 0.47 to 0.57, and z ranges from 0.2 to 0.27, more preferably wherein x ranges from 0.21 to 0.28, y ranges from 0.49 to 0.55, and z ranges from 0.22 to 0.26, and more preferably wherein x ranges from 0.22 to 0.26, y ranges from 0.51 to 0.53, and z ranges from 0.23 to 0.25.

According to the present invention it is particularly preferred that at least part of the particles comprises a CuNi₂Sn phase.

Alternatively, it is preferred according to the present invention that a ranges from 0.05 to 1.5 and b ranges from 0.03 to 1, preferably wherein a ranges from 0.1 to 1.1 and b ranges from 0.06 to 0.8, more preferably wherein a ranges from 0.15 to 0.8 and b ranges from 0.08 to 0.6, more preferably wherein a ranges from 0.2 to 0.6 and b ranges from 0.11 to 0.5, more preferably wherein a ranges from 0.23 to 0.5 and b ranges from 0.14 to 0.4, more preferably wherein a ranges from 0.26 to 0.45 and b ranges from 0.16 to 0.3, more preferably wherein a ranges from 0.28 to 0.4 and b ranges from 0.18 to 0.26, more preferably wherein a ranges from 0.3 to 0.35 and b ranges from 0.2 to 0.24, and more preferably wherein a ranges from 0.31 to 0.33 and b ranges from 0.21 to 0.23.

Furthermore, it is preferred according to said alternatively preferred embodiments that x ranges from 0.2 to 0.8, y ranges from 0.05 to 0.65, and z ranges from 0.07 to 0.43, preferably wherein x ranges from 0.25 to 0.7, y ranges from 0.1 to 0.55, and z ranges from 0.1 to 0.38, more preferably wherein x ranges from 0.3 to 0.65, y ranges from 0.14 to 0.47, and z ranges from 0.13 to 0.35, more preferably wherein x ranges from 0.35 to 0.6, y ranges from 0.18 to 0.42, and z ranges from 0.15 to 0.32, more preferably wherein x ranges from 0.38 to 0.57, y ranges from 0.22 to 0.39, and z ranges from 0.16 to 0.3, more preferably wherein x ranges from 0.41 to 0.55, y ranges from 0.24 to 0.37, and z ranges from 0.17 to 0.28, more preferably wherein x ranges from 0.43 to 0.53, y ranges from 0.26 to 0.35, and z ranges from 0.18 to 0.26, more preferably wherein x ranges from 0.45 to 0.51, y ranges from 0.28 to 0.33, and z ranges from 0.19 to 0.24, and more preferably wherein x ranges from 0.47 to 0.49, y ranges from 0.3 to 0.32, and z ranges from 0.2 to 0.22.

According to said alternatively preferred embodiments it is particularly preferred that at least part of the particles comprises a Cu₂NiSn phase.

In general, it is preferred according to the present invention that at least part of or all of the particles comprising two or more phases including a phase according to the formula (II) comprise a further phase having the composition according to the following formula (III)

Cu_{1-c}Ni_{0+c} (III)

wherein c ranges from 0.001 to 0.25, preferably from 0.005 to 0.2, more preferably from 0.01 to 0.15, more preferably from 0.03 to 0.13, more preferably from 0.05 to 0.11, more preferably from 0.06 to 0.1, and more preferably from 0.07 to 0.09.

Furthermore and independently thereof, it is preferred that the particles comprising two or more phases comprise two phases, wherein preferably particles comprising two phases are Janus particles.

It is preferred according to the present invention that the zeolitic material has a framework structure type selected from the group consisting of AEI, BEA, BEC, CHA, EUO, FAU, FER, GIS, HEU, ITH, ITW, LEV, MEL, MFI, MOR, MTN, MWW, AFT, AFV, AFX, AVL, EMT, GME, KFI, LEV, LTN, SFW, and TON, including mixed structures of two or more thereof, preferably from the group consisting of AEI, GME, LEV, BEA, CHA, FAU, FER, MFI, MOR, and MWW, including mixed structures of two or more thereof, more preferably from the group consisting of AEI, BEA, CHA, FAU, FER, MFI, and MOR, including mixed structures of two or more thereof, more preferably from the group consisting of AEI, CHA, and BEA, including mixed structures of two or more thereof, wherein more preferably the zeolitic material has a CHA- and/or BEA-type framework structure, wherein more preferably the zeolitic material has a CHA-type framework structure.

Furthermore and independently thereof, it is particularly preferred that the framework of the zeolitic material comprises YO₂, wherein Y is Si and Sn, wherein preferably the zeolitic material has a BEA-type framework structure.

Alternatively, it is particularly preferred that the framework of the zeolitic material comprises SiO₂ and X₂O₃, wherein X is a trivalent element selected from the group consisting of Al, B, In, Ga, and mixtures of two or more thereof, X preferably being Al and/or B, and more preferably being Al.

According to the present invention it is particularly preferred that the zeolitic material has a CHA-type framework structure, wherein preferably the zeolitic material having a CHA-type framework structure is selected from the group consisting of Willhendersonite, ZYT-6, SAPO-47, Na-Chabazite, Chabazite, LZ-218, Linde D, Linde R, SAPO-34, ZK-14, K-Chabazite, MeAPSO-47, Phi, DAF-5, UiO-21, |Li-Na| [Al-Si-O]-CHA, (Ni(deta)2)-UT-6, SSZ-13, and SSZ-62, including mixtures of two or more thereof,
more preferably from the group consisting of ZYT-6, SAPO-47, Na-Chabazite, Chabazite, LZ-218, Linde D, Linde R, SAPO-34, ZK-14, K-Chabazite, Phi, DAF-5, UiO-21, SSZ-13, and SSZ-62, including mixtures of two or more thereof,
more preferably from the group consisting of Chabazite, Linde D, Linde R, SAPO-34, SSZ-13, and SSZ-62, including mixtures of two or more thereof,
more preferably from the group consisting of Chabazite, SSZ-13, and SSZ-62, including mixtures of two or three thereof,
wherein more preferably the zeolitic material comprises chabazite and/or SSZ-13, preferably chabazite, and wherein more preferably the zeolitic material is chabazite and/or SSZ-13, preferably SSZ-13.

Alternatively, it is particularly preferred according to the present invention that the zeolitic material has an AEI-type framework structure, wherein preferably the zeolitic material having an AEI-type framework structure is selected from the group consisting of SSZ-39, SAPO-18, SIZ-8, including mixtures of two or more thereof, wherein more preferably the zeolitic material comprises SSZ-39, and wherein more preferably the zeolitic material is SSZ-39.

Further alternatively, it is particularly preferred according to the present invention that the zeolitic material has a BEA-type framework structure, wherein preferably the zeolitic material having a BEA-type framework structure is selected from the group consisting of CIT-6, tschernichite, SSZ-26, SSZ-33, zeolite beta, including mixtures of two or more thereof, wherein more preferably the zeolitic material comprises zeolite beta, and wherein more preferably the zeolitic material is zeolite beta.

As regards the synthesis of the zeolitic material, it is preferred according to the present invention that the zeolitic material is obtained and/or obtainable from organotemplate-free synthesis.

According to the present invention, it is particularly preferred that the intermetallic compound according to formula (I) and/or (II), and preferably according to formula (II), is a Heusler phase.

It is preferred according to the present invention that the average particle size D50 of the ternary intermetallic compound particles is in the range of from 3 nm to 2 µm, preferably in the range of from 5 nm to 1.5 µm, more preferably in the range of 10 nm to 1 µm, more preferably in the range of 20 nm to 700 nm, more preferably in the range of 30 nm to 500 nm, more preferably in the range of 40 nm to 300 nm, more preferably in the range of 50 nm to 200 nm, more preferably in the range of 60 nm to 150 nm, more preferably in the range of 70 nm to 120 nm, more preferably in the range of 80 nm to 100 nm, and more preferably in the range of 85 nm to 90 nm.

Furthermore and independently thereof, it is preferred that the weight ratio of the particles of the ternary intermetallic compound CuNiₐZ_{b} according to formula (I) to the zeolitic material ranges from 0.5:99.5 to 50:50, preferably from 1:99 to 30:70, more preferably from 3:97 to 20:80, more preferably from 5:95 to 15:85, more preferably from 6:94 to 12:88, more preferably from 7:93 to 11:89, and more preferably from 8:92 to 10:90.

Although the catalyst of the present invention may in principle be obtained according to any suitable method, it is preferred according to the present invention that it is prepared according to the inventive method for its synthesis. The present invention therefore relates to a method for the preparation of a catalyst comprising particles of a ternary intermetallic compound, and preferably of a catalyst according to any of the particular and preferred embodiments of the present invention, said method comprising:
(1) providing a solution containing one or more precursor compounds for Cu, one or more precursor compounds for Ni, one or more precursor compounds for Z, and one or more solvents;
(2) providing a suspension containing a zeolitic material and one or more solvents;
(3) adding the solution provided in (1) to the suspension provided in (2);
(4) evaporating the mixture obtained in (3) to dryness; and
(5) heating the mixture obtained in (4) in a hydrogen containing atmosphere;
wherein Z is selected from the group consisting of Al, Si, Ga, Ge, In, Sn, and Sb, including mixtures of two or more thereof.

According to the inventive method, it is preferred that Z is selected from the group consisting of Al, Si, Ga, In, and Sn, including mixtures of two or more thereof, preferably from the group consisting of Al, Si, Ga, and Sn, including mixtures of two or more thereof, more preferably from the group consisting of Al, Si, and Sn, including mixtures of two or more thereof, wherein more preferably Z is Al and/or Sn, preferably Sn.

As regards to one or more precursor compounds for copper, it is preferred according to the inventive method that the one or more precursor compounds for Cu are selected from the group consisting of salts of Cu, wherein preferably the salts of Cu are selected from the group consisting of acetates, acetylacetonates, nitrates, nitrites, sulfates, hydrogensulfates, dihydrogensulfates, sulfites, hydrogensulfites, phosphates, hydrogenphosphates, dihydrogenphosphates, halides, cyanides, cyanates, isocyanates, and mixtures of two or more thereof, more preferably from the group consisting of acetates, acetylacetonates, nitrates, chlorides, bromides, fluorides, and mixtures of two or more thereof, more preferably from the group consisting of acetates, acetylacetonates, and nitrates, wherein more preferably copper (II) nitrate is employed as the one or more precursor compounds for Cu.

Independently thereof, as regards to one or more precursor compounds for nickel, it is preferred according to the inventive method that the one or more precursor compounds for Ni are selected from the group consisting of salts of Ni, wherein preferably the salts of Ni are selected from the group consisting of acetates, acetylacetonates, nitrates, nitrites, sulfates, hydrogensulfates, dihydrogensulfates, sulfites, hydrogensulfites, phosphates, hydrogenphosphates, dihydrogenphosphates, halides, cyanides, cyanates, isocyanates, and mixtures of two or more thereof, more preferably from the group consisting of acetates, acetylacetonates, nitrates, chlorides, bromides, fluorides, and mixtures of two or more thereof, more preferably from the group consisting of acetates, acetylacetonates, and nitrates, wherein more preferably nickel (II) nitrate is employed as the one or more precursor compounds for Ni.

Further independently thereof, as regards to one or more precursor compounds for Z, it is preferred according to the inventive method that the one or more precursor compounds for Z are selected from the group consisting of salts of Z, wherein preferably the salts of Z are selected from the group consisting of C1-C4 alkoxides, acetates, nitrates, nitrites, sulfates, hydrogensulfates, dihydrogensulfates, sulfites, hydrogensulfites, phosphates, hydrogenphosphates, dihydrogenphosphates, halides, cyanides, cyanates, isocyanates, and mixtures of two or more thereof, more preferably from the group consisting of C2-C3 alkoxides, acetates, nitrates, chlorides, bromides, fluorides, and mixtures of two or more thereof, more preferably from the group consisting of ethoxides, acetates, nitrates, chlorides, and mixtures of two or more thereof, wherein more preferably one or more chlorides of Z are employed as the one or more precursor compounds for Z.

According to the inventive method, it is preferred that the one or more solvents in (1) and/or (2), preferably in both (1) and (2), are selected from the group consisting of polar solvents, preferably from the group consisting of polar protic solvents, more preferably from the group consisting of water, C1-C4 alcohols, and mixtures of two or more thereof, more preferably from the group consisting of water, C1-C3 alcohols, and mixtures of two or more thereof, more preferably from the group consisting of water, methanol, ethanol, and mixtures of two or three thereof, wherein more preferably the one or more solvents comprise water and/or methanol, preferably water, wherein more preferably methanol is employed as the one or more solvents.

Furthermore, and independently thereof, it is preferred according to the inventive method that the zeolitic material has a framework structure type selected from the group consisting of AEI, BEA, BEC, CHA, EUO, FAU, FER, GIS, HEU, ITH, ITW, LEV, MEL, MFI, MOR, MTN, MWW, AFT, AFV, AFX, AVL, EMT, GME, KFI, LEV, LTN, SFW, and TON, including mixed structures of two or more thereof, more preferably from the group consisting of AEI, GME, LEV, BEA, CHA, FAU, FER, MFI, MOR, and MWW, including mixed structures of two or more thereof, more preferably from the group consisting of AEI, BEA, CHA, FAU, FER, MFI, and MOR, including mixed structures of two or more thereof, more preferably from the group consisting of AEI, CHA, and BEA, including mixed structures of two or more thereof, wherein more preferably the zeolitic material has a CHA- and/or BEA-type framework structure, wherein more preferably the zeolitic material has a CHA-type framework structure.

Furthermore, and independently thereof, it is particularly preferred according to the inventive method that the framework of the zeolitic material comprises YO₂, wherein Y is Si and Sn, wherein preferably the zeolitic material has a BEA-type framework structure.

Alternatively, it is particularly preferred according to the inventive method that the framework of the zeolitic material comprises SiO₂ and X₂O₃, wherein X is a trivalent element selected from the group consisting of Al, B, In, Ga, and mixtures of two or more thereof, X preferably being Al and/or B, and more preferably being Al.

According to the inventive method, it is particularly preferred that the zeolitic material has a CHA-type framework structure, wherein preferably the zeolitic material having a CHA-type framework structure is selected from the group consisting of Willhendersonite, ZYT-6, SAPO-47, Na-Chabazite, Chabazite, LZ-218, Linde D, Linde R, SAPO-34, ZK-14, K-Chabazite, MeAPSO-47, Phi, DAF-5, UiO-21, |Li-Na| [Al-Si-O]-CHA, (Ni(deta)2)-UT-6, SSZ-13, and SSZ-62, including mixtures of two or more thereof,
more preferably from the group consisting of ZYT-6, SAPO-47, Na-Chabazite, Chabazite, LZ-218, Linde D, Linde R, SAPO-34, ZK-14, K-Chabazite, Phi, DAF-5, UiO-21, SSZ-13, and SSZ-62, including mixtures of two or more thereof,
more preferably from the group consisting of Chabazite, Linde D, Linde R, SAPO-34, SSZ-13, and SSZ-62, including mixtures of two or more thereof,
more preferably from the group consisting of Chabazite, SSZ-13, and SSZ-62, including mixtures of two or three thereof,
wherein more preferably the zeolitic material comprises chabazite and/or SSZ-13, preferably chabazite, and wherein more preferably the zeolitic material is chabazite and/or SSZ-13, preferably SSZ-13.

Alternatively, it is particularly preferred according to the inventive method that the zeolitic material has an AEI-type framework structure, wherein preferably the zeolitic material having an AEI-type framework structure is selected from the group consisting of SSZ-39, SAPO-18, SIZ-8, including mixtures of two or more thereof, wherein more preferably the zeolitic material comprises SSZ-39, and wherein more preferably the zeolitic material is SSZ-39.

Further alternatively, it is particularly preferred according to the inventive method that the zeolitic material has a BEA-type framework structure, wherein preferably the zeolitic material having a BEA-type framework structure is selected from the group consisting of CIT-6, tschernichite, SSZ-26, SSZ-33, zeolite beta, including mixtures of two or more thereof, wherein more preferably the zeolitic material comprises zeolite beta, and wherein more preferably the zeolitic material is zeolite beta.

According to the inventive method, it is preferred that the zeolitic material is obtained and/or obtainable from organotemplate-free synthesis.

Furthermore, and independently thereof, it is preferred according to the inventive method that in (4) the evaporation to dryness of the mixture obtained in (3) involves heating of the mixture, wherein the mixture is preferably heated to a temperature in the range of from 30 to 120°C, more preferably from 30 to 90°C, more preferably from 35 to 70°C, more preferably from 40 to 60°C, and more preferably from 45 to 55°C.

Furthermore, and independently thereof, it is preferred according to the inventive method that in (5) the mixture is heated to a temperature ranging from 300 to 1,200°C, more preferably from 500 to 1,000°C, more preferably from 600 to 900°C, more preferably from 750 to 850°C and more preferably from 775 to 825°C.

Furthermore, and independently thereof, it is preferred according to the inventive method that wherein the atmosphere in (5) contains 5 to 80 vol.-% or less of hydrogen in addition to an inert gas, preferably 10 to 70 vol.-% or less of hydrogen, more preferably 20 to 65 vol.-% or less of hydrogen, more preferably 30 to 60 vol.-% or less of hydrogen, more preferably 40 to 55 vol.-% or less, and more preferably 45 to 50 vol.-% or less of hydrogen in (5).

Furthermore, and independently thereof, it is preferred according to the inventive method that the step of heating the mixture obtained in (4) in a hydrogen containing atmosphere in (5) is performed for a duration of from 0.5 to 12 h, more preferably from 1 to 6 h, more preferably from 2 to 4.5 h, and more preferably from 2.5 to 3.5 h.

In addition to the inventive catalyst per se according to the particular and preferred embodiments described in the foregoing, the present invention further relates to a catalyst obtained and/or obtainable according to any of the particular and preferred embodiments of the inventive process as described in the present application.

Finally, the present invention also relates to the use of the inventive catalyst per se according to any of the particular and preferred embodiments as described in the present application as well as to the use of the inventive catalyst as obtained and/or obtainable according to any of the particular and preferred embodiments of the inventive process, wherein said use is for the selective catalytic reduction (SCR) of nitrogen oxides NOₓ; for the storage and/or adsorption of CO₂; for the oxidation of NH₃, in particular for the oxidation of NH₃ slip in diesel systems; for the decomposition of N₂O; as an additive in fluid catalytic cracking (FCC) processes; and/or as a catalyst in organic conversion reactions, preferably in the conversion of alcohols to olefins, and more preferably in methanol to olefin (MTO) catalysis; more preferably for the selective catalytic reduction (SCR) of nitrogen oxides NOₓ, and more preferably for the selective catalytic reduction (SCR) of nitrogen oxides NOₓ in exhaust gas from a combustion engine, preferably from a diesel engine or from a lean burn gasoline engine.

The present invention is further illustrated by the following embodiments and combinations of embodiments as indicated by the respective dependencies and back-references. In particular, it is noted that in each instance where a range of embodiments is mentioned, for example in the context of a term such as "The ... of any of embodiments 1 to 4", every embodiment in this range is meant to be explicitly disclosed for the skilled person, i.e. the wording of this term is to be understood by the skilled person as being synonymous to "The ... of any of embodiments 1, 2, 3, and 4".
1. A catalyst comprising particles of a ternary intermetallic compound of the following formula (I):

   CuNiₐZ_{b} (I)

   wherein 0 < a ≤ 2, and 0 < b ≤ 1, and wherein Z is selected from the group consisting of Al, Si, Ga, Ge, In, Sn, and Sb, including mixtures of two or more thereof;
   wherein at least part of the particles comprise two or more phases, wherein one of the phases has the composition according to the following formula (II)

      CuₓNi_{y}Z_{z} (II)

      wherein x + y + z = 1, and
      wherein x ranges from 0.06 to 0.8;
      y ranges from 0.05 to 0.75; and
      z ranges from 0.05 to 0.43;
      wherein the particles of the ternary intermetallic compound are supported on a zeolitic material, and
      wherein the composition of the phases is preferably determined by EDX imaging, more preferably by HAADF-STEM mapping and EDX imaging, more preferably by simultaneous HAADF-STEM mapping and EDX imaging.
2. The catalyst of embodiment 1, wherein Z is selected from the group consisting of Al, Si, Ga, In, and Sn, including mixtures of two or more thereof, preferably from the group consisting of Al, Si, Ga, and Sn, including mixtures of two or more thereof, more preferably from the group consisting of Al, Si, and Sn, including mixtures of two or more thereof, wherein more preferably Z is Al and/or Sn, preferably Sn.
3. The catalyst of embodiment 1 or 2, wherein a ranges from 0.05 to 2 and b ranges from 0.02 to 1, preferably wherein a ranges from 0.1 to 1.6 and b ranges from 0.05 to 0.8, more preferably wherein a ranges from 0.15 to 1.3 and b ranges from 0.07 to 0.6, more preferably wherein a ranges from 0.2 to 1 and b ranges from 0.1 to 0.5, more preferably wherein a ranges from 0.25 to 0.8 and b ranges from 0.13 to 0.4, more preferably wherein a ranges from 0.3 to 0.6 and b ranges from 0.15 to 0.3, more preferably wherein a ranges from 0.35 to 0.5 and b ranges from 0.17 to 0.25, more preferably wherein a ranges from 0.4 to 0.46 and b ranges from 0.19 to 0.23, and more preferably wherein a ranges from 0.42 to 0.44 and b ranges from 0.2 to 0.22.
4. The catalyst of any of embodiments 1 to 3, wherein x ranges from 0.1 to 0.7, y ranges from 0.12 to 0.7, and z ranges from 0.06 to 0.42, preferably wherein x ranges from 0.15 to 0.6, y ranges from 0.17 to 0.65, and z ranges from 0.09 to 0.37, more preferably wherein x ranges from 0.2 to 0.55, y ranges from 0.22 to 0.6, and z ranges from 0.12 to 0.34, more preferably wherein x ranges from 0.25 to 0.5, y ranges from 0.27 to 0.55, and z ranges from 0.15 to 0.31, more preferably wherein x ranges from 0.28 to 0.46, y ranges from 0.32 to 0.52, and z ranges from 0.17 to 0.29, more preferably wherein x ranges from 0.3 to 0.44, y ranges from 0.34 to 0.5, and z ranges from 0.19 to 0.27, more preferably wherein x ranges from 0.32 to 0.42, y ranges from 0.36 to 0.48, and z ranges from 0.2 to 0.26, more preferably wherein x ranges from 0.34 to 0.4, y ranges from 0.38 to 0.46, and z ranges from 0.21 to 0.25, and more preferably wherein x ranges from 0.35 to 0.37, y ranges from 0.4 to 0.44, and z ranges from 0.22 to 0.24.
5. The catalyst of any of embodiments 1 to 4, wherein a ranges from 0.1 to 2 and b ranges from 0.02 to 1, preferably wherein a ranges from 0.2 to 1.6 and b ranges from 0.05 to 0.8, more preferably wherein a ranges from 0.3 to 1.3 and b ranges from 0.07 to 0.6, more preferably wherein a ranges from 0.35 to 1 and b ranges from 0.1 to 0.5, more preferably wherein a ranges from 0.4 to 0.8 and b ranges from 0.13 to 0.4, more preferably wherein a ranges from 0.45 to 0.7 and b ranges from 0.15 to 0.3, more preferably wherein a ranges from 0.48 to 0.65 and b ranges from 0.17 to 0.25, more preferably wherein a ranges from 0.51 to 0.59 and b ranges from 0.19 to 0.23, and more preferably wherein a ranges from 0.53 to 0.57 and b ranges from 0.2 to 0.22.
6. The catalyst of any of embodiments 1 to 5, wherein x ranges from 0.06 to 0.5, y ranges from 0.3 to 0.75, and z ranges from 0.05 to 0.41, preferably wherein x ranges from 0.09 to 0.45, y ranges from 0.35 to 0.7, and z ranges from 0.08 to 0.36, more preferably wherein x ranges from 0.12 to 0.42, y ranges from 0.38 to 0.65, and z ranges from 0.11 to 0.33, more preferably wherein x ranges from 0.15 to 0.39, y ranges from 0.41 to 0.63, and z ranges from 0.14 to 0.3, more preferably wherein x ranges from 0.18 to 0.36, y ranges from 0.43 to 0.61, and z ranges from 0.16 to 0.29, more preferably wherein x ranges from 0.19 to 0.33, y ranges from 0.45 to 0.59, and z ranges from 0.18 to 0.28, more preferably wherein x ranges from 0.20 to 0.30, y ranges from 0.47 to 0.57, and z ranges from 0.2 to 0.27, more preferably wherein x ranges from 0.21 to 0.28, y ranges from 0.49 to 0.55, and z ranges from 0.22 to 0.26, and more preferably wherein x ranges from 0.22 to 0.26, y ranges from 0.51 to 0.53, and z ranges from 0.23 to 0.25.
7. The catalyst of any of embodiments 1 to 6, wherein at least part of the particles comprises a CuNi₂Sn phase.
8. The catalyst of any of embodiments 1 to 4, wherein a ranges from 0.05 to 1.5 and b ranges from 0.03 to 1, preferably wherein a ranges from 0.1 to 1.1 and b ranges from 0.06 to 0.8, more preferably wherein a ranges from 0.15 to 0.8 and b ranges from 0.08 to 0.6, more preferably wherein a ranges from 0.2 to 0.6 and b ranges from 0.11 to 0.5, more preferably wherein a ranges from 0.23 to 0.5 and b ranges from 0.14 to 0.4, more preferably wherein a ranges from 0.26 to 0.45 and b ranges from 0.16 to 0.3, more preferably wherein a ranges from 0.28 to 0.4 and b ranges from 0.18 to 0.26, more preferably wherein a ranges from 0.3 to 0.35 and b ranges from 0.2 to 0.24, and more preferably wherein a ranges from 0.31 to 0.33 and b ranges from 0.21 to 0.23.
9. The catalyst of embodiment 8, wherein x ranges from 0.2 to 0.8, y ranges from 0.05 to 0.65, and z ranges from 0.07 to 0.43, preferably wherein x ranges from 0.25 to 0.7, y ranges from 0.1 to 0.55, and z ranges from 0.1 to 0.38, more preferably wherein x ranges from 0.3 to 0.65, y ranges from 0.14 to 0.47, and z ranges from 0.13 to 0.35, more preferably wherein x ranges from 0.35 to 0.6, y ranges from 0.18 to 0.42, and z ranges from 0.15 to 0.32, more preferably wherein x ranges from 0.38 to 0.57, y ranges from 0.22 to 0.39, and z ranges from 0.16 to 0.3, more preferably wherein x ranges from 0.41 to 0.55, y ranges from 0.24 to 0.37, and z ranges from 0.17 to 0.28, more preferably wherein x ranges from 0.43 to 0.53, y ranges from 0.26 to 0.35, and z ranges from 0.18 to 0.26, more preferably wherein x ranges from 0.45 to 0.51, y ranges from 0.28 to 0.33, and z ranges from 0.19 to 0.24, and more preferably wherein x ranges from 0.47 to 0.49, y ranges from 0.3 to 0.32, and z ranges from 0.2 to 0.22.
10. The catalyst of embodiment 8 or 9, wherein at least part of the particles comprises a Cu₂NiSn phase.
11. The catalyst of any of embodiments 1 to 10, wherein at least part of or all of the particles comprising two or more phases including a phase according to the formula (II) comprise a further phase having the composition according to the following formula (III)

   Cu_{1-c}Ni_{0+c} (III)

   wherein c ranges from 0.001 to 0.25, preferably from 0.005 to 0.2, more preferably from 0.01 to 0.15, more preferably from 0.03 to 0.13, more preferably from 0.05 to 0.11, more preferably from 0.06 to 0.1, and more preferably from 0.07 to 0.09.
12. The catalyst of any of embodiments 1 to 11, wherein the particles comprising two or more phases comprise two phases, wherein preferably particles comprising two phases are Janus particles.
13. The catalyst of any of embodiments 1 to 12, wherein the zeolitic material has a framework structure type selected from the group consisting of AEI, BEA, BEC, CHA, EUO, FAU, FER, GIS, HEU, ITH, ITW, LEV, MEL, MFI, MOR, MTN, MWW, AFT, AFV, AFX, AVL, EMT, GME, KFI, LEV, LTN, SFW, and TON, including mixed structures of two or more thereof, preferably from the group consisting of AEI, GME, LEV, BEA, CHA, FAU, FER, MFI, MOR, and MWW, including mixed structures of two or more thereof, more preferably from the group consisting of AEI, BEA, CHA, FAU, FER, MFI, and MOR, including mixed structures of two or more thereof, more preferably from the group consisting of AEI, CHA, and BEA, including mixed structures of two or more thereof, wherein more preferably the zeolitic material has a CHA- and/or BEA-type framework structure, wherein more preferably the zeolitic material has a CHA-type framework structure.
14. The catalyst of any of embodiments 1 to 13, wherein the framework of the zeolitic material comprises YO₂, wherein Y is Si and Sn, wherein preferably the zeolitic material has a BEA-type framework structure.
15. The catalyst of any of embodiments 1 to 13, wherein the framework of the zeolitic material comprises SiO₂ and X₂O₃, wherein X is a trivalent element selected from the group consisting of Al, B, In, Ga, and mixtures of two or more thereof, X preferably being Al and/or B, and more preferably being Al.
16. The catalyst of any of embodiments 1 to 15, wherein the zeolitic material has a CHA-type framework structure, wherein preferably the zeolitic material having a CHA-type framework structure is selected from the group consisting of Willhendersonite, ZYT-6, SAPO-47, Na-Chabazite, Chabazite, LZ-218, Linde D, Linde R, SAPO-34, ZK-14, K-Chabazite, MeAPSO-47, Phi, DAF-5, UiO-21, |Li-Na| [Al-Si-O]-CHA, (Ni(deta)2)-UT-6, SSZ-13, and SSZ-62, including mixtures of two or more thereof,
   more preferably from the group consisting of ZYT-6, SAPO-47, Na-Chabazite, Chabazite, LZ-218, Linde D, Linde R, SAPO-34, ZK-14, K-Chabazite, Phi, DAF-5, UiO-21, SSZ-13, and SSZ-62, including mixtures of two or more thereof,
   more preferably from the group consisting of Chabazite, Linde D, Linde R, SAPO-34, SSZ-13, and SSZ-62, including mixtures of two or more thereof,
   more preferably from the group consisting of Chabazite, SSZ-13, and SSZ-62, including mixtures of two or three thereof,
   wherein more preferably the zeolitic material comprises chabazite and/or SSZ-13, preferably chabazite, and wherein more preferably the zeolitic material is chabazite and/or SSZ-13, preferably SSZ-13.
17. The catalyst of any of embodiments 1 to 15, wherein the zeolitic material has an AEI-type framework structure, wherein preferably the zeolitic material having an AEI-type framework structure is selected from the group consisting of SSZ-39, SAPO-18, SIZ-8, including mixtures of two or more thereof, wherein more preferably the zeolitic material comprises SSZ-39, and wherein more preferably the zeolitic material is SSZ-39.
18. The catalyst of any of embodiments 1 to 15, wherein the zeolitic material has a BEA-type framework structure, wherein preferably the zeolitic material having a BEA-type framework structure is selected from the group consisting of CIT-6, tschernichite, SSZ-26, SSZ-33, zeolite beta, including mixtures of two or more thereof, wherein more preferably the zeolitic material comprises zeolite beta, and wherein more preferably the zeolitic material is zeolite beta.
19. The catalyst of any of embodiments 1 to 18, wherein the zeolitic material is obtained and/or obtainable from organotemplate-free synthesis.
20. The catalyst of any of embodiments 1 to 19, wherein the intermetallic compound according to formula (I) and/or (II), and preferably according to formula (II), is a Heusler phase.
21. The catalyst of any of embodiments 1 to 20, wherein the average particle size D50 of the ternary intermetallic compound particles is in the range of from 3 nm to 2 µm, preferably in the range of from 5 nm to 1.5 µm, more preferably in the range of 10 nm to 1 µm, more preferably in the range of 20 nm to 700 nm, more preferably in the range of 30 nm to 500 nm, more preferably in the range of 40 nm to 300 nm, more preferably in the range of 50 nm to 200 nm, more preferably in the range of 60 nm to 150 nm, more preferably in the range of 70 nm to 120 nm, more preferably in the range of 80 nm to 100 nm, and more preferably in the range of 85 nm to 90 nm.
22. The catalyst of any of embodiments 1 to 21, wherein the weight ratio of the particles of the ternary intermetallic compound CuNiₐZ_{b} according to formula (I) to the zeolitic material ranges from 0.5:99.5 to 50:50, preferably from 1:99 to 30:70, more preferably from 3:97 to 20:80, more preferably from 5:95 to 15:85, more preferably from 6:94 to 12:88, more preferably from 7:93 to 11:89, and more preferably from 8:92 to 10:90.
23. Method for the preparation of a catalyst comprising particles of a ternary intermetallic compound, preferably of a catalyst according to any of embodiments 1 to 22, said method comprising:
   (1) providing a solution containing one or more precursor compounds for Cu, one or more precursor compounds for Ni, one or more precursor compounds for Z, and one or more solvents;
   (2) providing a suspension containing a zeolitic material and one or more solvents;
   (3) adding the solution provided in (1) to the suspension provided in (2);
   (4) evaporating the mixture obtained in (3) to dryness; and
   (5) heating the mixture obtained in (4) in a hydrogen containing atmosphere;
   wherein Z is selected from the group consisting of Al, Si, Ga, Ge, In, Sn, and Sb, including mixtures of two or more thereof.
24. The method of embodiment 23, wherein Z is selected from the group consisting of Al, Si, Ga, In, and Sn, including mixtures of two or more thereof, preferably from the group consisting of Al, Si, Ga, and Sn, including mixtures of two or more thereof, more preferably from the group consisting of Al, Si, and Sn, including mixtures of two or more thereof, wherein more preferably Z is Al and/or Sn, preferably Sn.
25. The method of embodiment 23 or 24, wherein the one or more precursor compounds for Cu are selected from the group consisting of salts of Cu, wherein preferably the salts of Cu are selected from the group consisting of acetates, acetylacetonates, nitrates, nitrites, sulfates, hydrogensulfates, dihydrogensulfates, sulfites, hydrogensulfites, phosphates, hydrogenphosphates, dihydrogenphosphates, halides, cyanides, cyanates, isocyanates, and mixtures of two or more thereof, more preferably from the group consisting of acetates, acetylacetonates, nitrates, chlorides, bromides, fluorides, and mixtures of two or more thereof, more preferably from the group consisting of acetates, acetylacetonates, and nitrates, wherein more preferably copper (II) nitrate is employed as the one or more precursor compounds for Cu.
26. The catalyst of any of embodiments 23 to 25, wherein the one or more precursor compounds for Ni are selected from the group consisting of salts of Ni, wherein preferably the salts of Ni are selected from the group consisting of acetates, acetylacetonates, nitrates, nitrites, sulfates, hydrogensulfates, dihydrogensulfates, sulfites, hydrogensulfites, phosphates, hydrogenphosphates, dihydrogenphosphates, halides, cyanides, cyanates, isocyanates, and mixtures of two or more thereof, more preferably from the group consisting of acetates, acetylacetonates, nitrates, chlorides, bromides, fluorides, and mixtures of two or more thereof, more preferably from the group consisting of acetates, acetylacetonates, and nitrates, wherein more preferably nickel (II) nitrate is employed as the one or more precursor compounds for Ni.
27. The catalyst of any of embodiments 23 to 26, wherein the one or more precursor compounds for Z are selected from the group consisting of salts of Z, wherein preferably the salts of Z are selected from the group consisting of C1-C4 alkoxides, acetates, nitrates, nitrites, sulfates, hydrogensulfates, dihydrogensulfates, sulfites, hydrogensulfites, phosphates, hydrogenphosphates, dihydrogenphosphates, halides, cyanides, cyanates, isocyanates, and mixtures of two or more thereof, more preferably from the group consisting of C2-C3 alkoxides, acetates, nitrates, chlorides, bromides, fluorides, and mixtures of two or more thereof, more preferably from the group consisting of ethoxides, acetates, nitrates, chlorides, and mixtures of two or more thereof, wherein more preferably one or more chlorides of Z are employed as the one or more precursor compounds for Z.
28. The catalyst of any of embodiments 23 to 27, wherein the one or more solvents in (1) and/or (2), preferably in both (1) and (2), are selected from the group consisting of polar solvents, preferably from the group consisting of polar protic solvents, more preferably from the group consisting of water, C1-C4 alcohols, and mixtures of two or more thereof, more preferably from the group consisting of water, C1-C3 alcohols, and mixtures of two or more thereof, more preferably from the group consisting of water, methanol, ethanol, and mixtures of two or three thereof, wherein more preferably the one or more solvents comprise water and/or methanol, preferably water, wherein more preferably methanol is employed as the one or more solvents.
29. The catalyst of any of embodiments 23 to 28, wherein the zeolitic material has a framework structure type selected from the group consisting of AEI, BEA, BEC, CHA, EUO, FAU, FER, GIS, HEU, ITH, ITW, LEV, MEL, MFI, MOR, MTN, MWW, AFT, AFV, AFX, AVL, EMT, GME, KFI, LEV, LTN, SFW, and TON, including mixed structures of two or more thereof, more preferably from the group consisting of AEI, GME, LEV, BEA, CHA, FAU, FER, MFI, MOR, and MWW, including mixed structures of two or more thereof, more preferably from the group consisting of AEI, BEA, CHA, FAU, FER, MFI, and MOR, including mixed structures of two or more thereof, more preferably from the group consisting of AEI, CHA, and BEA, including mixed structures of two or more thereof, wherein more preferably the zeolitic material has a CHA- and/or BEA-type framework structure, wherein more preferably the zeolitic material has a CHA-type framework structure.
30. The catalyst of any of embodiments 23 to 29, wherein the framework of the zeolitic material comprises YO₂, wherein Y is Si and Sn, wherein preferably the zeolitic material has a BEA-type framework structure.
31. The catalyst of any of embodiments 23 to 29, wherein the framework of the zeolitic material comprises SiO₂ and X₂O₃, wherein X is a trivalent element selected from the group consisting of Al, B, In, Ga, and mixtures of two or more thereof, X preferably being Al and/or B, and more preferably being Al.
32. The catalyst of any of embodiments 23 to 31, wherein the zeolitic material has a CHA-type framework structure, wherein preferably the zeolitic material having a CHA-type framework structure is selected from the group consisting of Willhendersonite, ZYT-6, SAPO-47, Na-Chabazite, Chabazite, LZ-218, Linde D, Linde R, SAPO-34, ZK-14, K-Chabazite, MeAPSO-47, Phi, DAF-5, UiO-21, |Li-Na| [Al-Si-O]-CHA, (Ni(deta)2)-UT-6, SSZ-13, and SSZ-62, including mixtures of two or more thereof,
   more preferably from the group consisting of ZYT-6, SAPO-47, Na-Chabazite, Chabazite, LZ-218, Linde D, Linde R, SAPO-34, ZK-14, K-Chabazite, Phi, DAF-5, UiO-21, SSZ-13, and SSZ-62, including mixtures of two or more thereof,
   more preferably from the group consisting of Chabazite, Linde D, Linde R, SAPO-34, SSZ-13, and SSZ-62, including mixtures of two or more thereof,
   more preferably from the group consisting of Chabazite, SSZ-13, and SSZ-62, including mixtures of two or three thereof,
   wherein more preferably the zeolitic material comprises chabazite and/or SSZ-13, preferably chabazite, and wherein more preferably the zeolitic material is chabazite and/or SSZ-13, preferably SSZ-13.
33. The catalyst of any of embodiments 23 to 31, wherein the zeolitic material has an AEI-type framework structure, wherein preferably the zeolitic material having an AEI-type framework structure is selected from the group consisting of SSZ-39, SAPO-18, SIZ-8, including mixtures of two or more thereof, wherein more preferably the zeolitic material comprises SSZ-39, and wherein more preferably the zeolitic material is SSZ-39.
34. The catalyst of any of embodiments 23 to 31, wherein the zeolitic material has a BEA-type framework structure, wherein preferably the zeolitic material having a BEA-type framework structure is selected from the group consisting of CIT-6, tschernichite, SSZ-26, SSZ-33, zeolite beta, including mixtures of two or more thereof, wherein more preferably the zeolitic material comprises zeolite beta, and wherein more preferably the zeolitic material is zeolite beta.
35. The catalyst of any of embodiments 23 to 34, wherein the zeolitic material is obtained and/or obtainable from organotemplate-free synthesis.
36. The catalyst of any of embodiments 23 to 35, wherein in (4) the evaporation to dryness of the mixture obtained in (3) involves heating of the mixture, wherein the mixture is preferably heated to a temperature in the range of from 30 to 120°C, more preferably from 30 to 90°C, more preferably from 35 to 70°C, more preferably from 40 to 60°C, and more preferably from 45 to 55°C.
37. The catalyst of any of embodiments 23 to 36, wherein in (5) the mixture is heated to a temperature ranging from 300 to 1,200°C, more preferably from 500 to 1,000°C, more preferably from 600 to 900°C, more preferably from 750 to 850°C and more preferably from 775 to 825°C.
38. The catalyst of any of embodiments 23 to 37, wherein the atmosphere in (5) contains 5 to 80 vol.-% or less of hydrogen in addition to an inert gas, preferably 10 to 70 vol.-% or less of hydrogen, more preferably 20 to 65 vol.-% or less of hydrogen, more preferably 30 to 60 vol.-% or less of hydrogen, more preferably 40 to 55 vol.-% or less, and more preferably 45 to 50 vol.-% or less of hydrogen in (5).
39. The catalyst of any of embodiments 23 to 38, wherein the step of heating the mixture obtained in (4) in a hydrogen containing atmosphere in (5) is performed for a duration of from 0.5 to 12 h, more preferably from 1 to 6 h, more preferably from 2 to 4.5 h, and more preferably from 2.5 to 3.5 h.
40. A catalyst obtained and/or obtainable according to the process of any of embodiments 23 to 39.
41. Use of a catalyst according to any of embodiments 1 to 22 and 40 for the selective catalytic reduction (SCR) of nitrogen oxides NOₓ; for the storage and/or adsorption of CO₂; for the oxidation of NH₃, in particular for the oxidation of NH₃ slip in diesel systems; for the decomposition of N₂O; as an additive in fluid catalytic cracking (FCC) processes; and/or as a catalyst in organic conversion reactions, preferably in the conversion of alcohols to olefins, and more preferably in methanol to olefin (MTO) catalysis; more preferably for the selective catalytic reduction (SCR) of nitrogen oxides NOₓ, and more preferably for the selective catalytic reduction (SCR) of nitrogen oxides NOₓ in exhaust gas from a combustion engine, preferably from a diesel engine or from a lean burn gasoline engine.

### DESCRIPTION OF THE FIGURES

- Figure 1: displays the X-Ray Diffraction (XRD) pattern of the catalyst sample obtained from example 1, respectively. In the figures, the diffraction angle 2 theta in ° is shown along the abscissa and the intensities in arbitrary units are plotted along the ordinate.
- Figure 2: shows the HAADF-STEM/EDX image of a sample of the catalyst obtained from example 1, wherein the values from the EDX measurements for the molar composition of the phases of the Janus particles which were analyzed are indicated by the respective arrows.
- Figure 3: displays the X-Ray Diffraction (XRD) pattern of the catalyst sample obtained from example 2, respectively. In the figures, the diffraction angle 2 theta in ° is shown along the abscissa and the intensities in arbitrary units are plotted along the ordinate.
- Figure 4: shows the HAADF-STEM/EDX image of a sample of the catalyst obtained from example 2, wherein the values from the EDX measurements for the molar composition of the phases of the Janus particles which were analyzed are indicated by the respective arrows.
- Figure 5: displays the X-Ray Diffraction (XRD) pattern of the catalyst sample obtained from example 3, respectively. In the figures, the diffraction angle 2 theta in ° is shown along the abscissa and the intensities in arbitrary units are plotted along the ordinate.
- Figure 6: shows the HAADF-STEM/EDX image of a sample of the catalyst obtained from example 3, wherein the values from the EDX measurements for the molar composition of the phases of the Janus particles which were analyzed are indicated by the respective arrows.
- Figure 7: displays the X-Ray Diffraction (XRD) pattern of the catalyst sample obtained from example 4, respectively. In the figures, the diffraction angle 2 theta in ° is shown along the abscissa and the intensities in arbitrary units are plotted along the ordinate.
- Figure 8: shows the HAADF-STEM/EDX image of a sample of the catalyst obtained from example 4, wherein the values from the EDX measurements for the molar composition of the phases of the Janus particles which were analyzed are indicated by the respective arrows.
- Figure 9: displays the X-Ray Diffraction (XRD) pattern of the catalyst sample obtained from example 5, respectively. In the figures, the diffraction angle 2 theta in ° is shown along the abscissa and the intensities in arbitrary units are plotted along the ordinate.

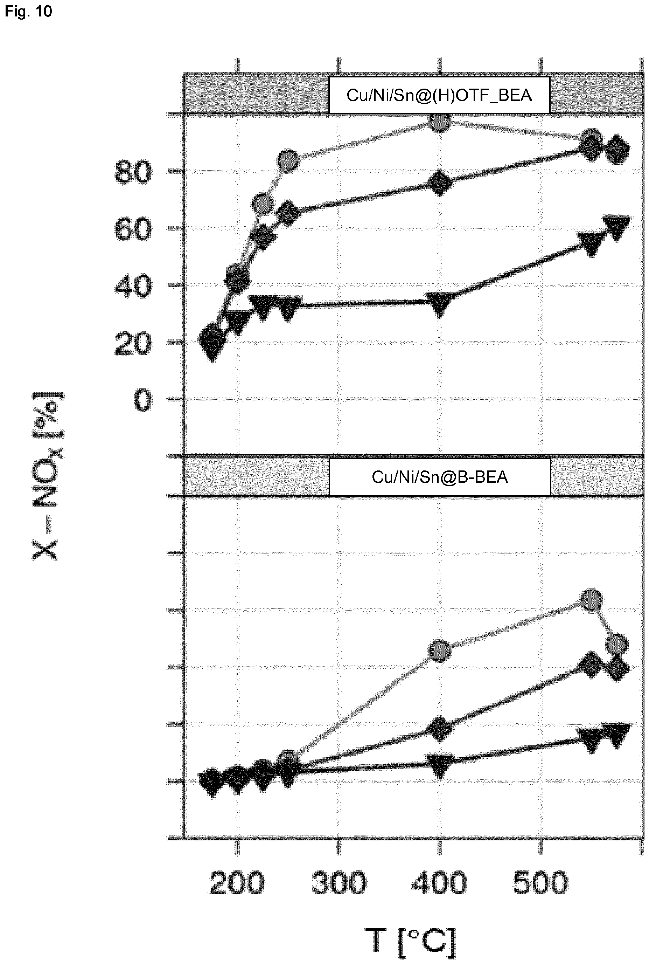

- Figure 10: displays the results from SCR testing performed on the zeolitic materials obtained from examples 1 and 2 after shaping thereof according to example 6, respectively. In the figure, the temperature at which the SCR testing was performed is shown along the abscissa, and the NOₓ conversion in % is shown along with ordinate. The testing values for the fresh catalyst is shown as "●" for the material aged for 50 h at 650°C is shown as "◆" and for the material aged for 16 h at 800°C is shown as "▼".

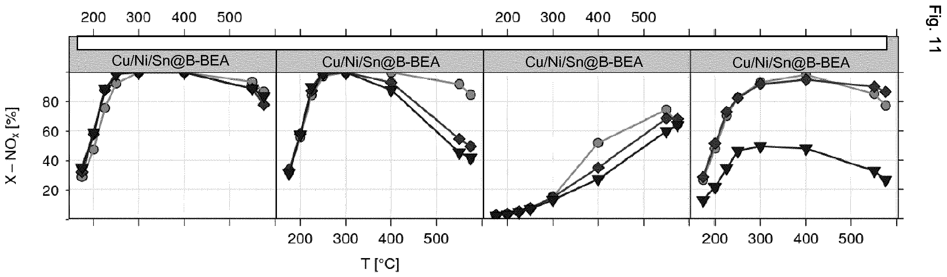

- Figure 11: displays the results from SCR testing performed on the zeolitic materials obtained from examples 3 to 6 after shaping thereof according to example 7, respectively. In the figure, the temperature at which the SCR testing was performed is shown along the abscissa, and the NOₓ conversion in % is shown along with ordinate. The testing values for the fresh catalyst is shown as "●" for the material aged for 50 h at 650°C is shown as "◆" and for the material aged for 16 h at 800°C is shown as "▼".

### EXPERIMENTAL SECTION

### Measurement of the x-ray diffraction patterns

The X-ray powder diffraction (XRD) measurements were carried out with a D 5005 type diffractometer of Siemens/Bruker AXS using a Cu Kalpha Source (lambda = 0.15405 nm). The source was operated at 35 kV and 25 mA and the data were collected in a 2theta range from 3 to 110 ° with a step size of 0.1 ° (2theta).

### Measurement of the HAADF-STEM/EDX images

Samples for Transmission Electron Microscopy (TEM) were prepared on ultra-thin carbon TEM carriers. The powder was therefore dispersed in ethanol. One drop of the dispersion was applied between two glass objective slides and gently dispersed. The TEM carrier film was subsequently dipped on the resulting thin film. The samples were imaged by TEM using a Tecnai Osiris machine (FEI Company, Hillsboro, USA) operated at 200 keV under bright-field as well as high-angle annular dark-field scanning TEM (HAADF-STEM) conditions. Chemical composition maps were acquired by energy-dispersive x-ray spectroscopy (EDXS). Images and elemental maps were evaluated using the iTEM (Olympus, Tokyo, Japan, version: 5.2.3554) as well as the Esprit (Bruker, Billerica, USA, version 1.9) software packages.

### Reference Example 1: Synthesis zeolite beta (H-form) from organotemplate-free synthesis

12.693 kg of distilled water were provided in a 60 L autoclave. Two charges of 477.5 g of NaAlO₂ (commercially available from Aldrich) were each dissolved in 2.5 L of distilled water and added to the autoclave, wherein 3.5 L of distilled water were used for rinsing between the individual steps. 21.447 kg of sodium waterglass solution (26 wt.-% SiO₂ and 8 wt.-% Na₂O; commercially available from Woellner) were slowly added under stirring at 200 rpm, after which 3.762 kg of colloidal silica (Ludox® AS40 from Grace) were added and the resulting mixture stirred at 200 rpm for an additional 2 h. 717 g of zeolite Beta seeds (commercially available from Zeolyst International, Valley Forge, PA 19482, USA, under the tradename CP814C, which was converted to the H-form by calcination) were then added in smaller portions to the mixture, thus affording an aluminosilicate gel with a molar ratio of 1.00 SiO₂ : 0.042 Al₂O₃ : 0.29 Na₂O : 17.49 H₂O. The reaction mixture was then crystallized in the autoclave under stirring at 100 rpm, wherein the mixture was heated in 3 h to 120°C and held at that temperature for 67 h. The solid reaction product was then filtered off and washed to electroneutrality (conductivity of the wash-water < 200 µS). The solid was dried over night at 120°C in a drying oven for affording 1.9 kg of a white powder of zeolite beta displaying a crystallinity of 71% as determined from X-ray diffraction.

302 g of the zeolite beta obtained and 301 g of ammonium nitrate were then added to 2 kg of distilled water and stirred. The suspension was then transferred to a 4 L round bottom flask and the initial receptacle rinsed with 1 L of distilled water. The resulting mixture was then heated to 80 °C and kept at this temperature under continuous stirring for 2h. The solid was filtered off and the filter cake was then dried for 3 h at 120 °C and then calcined at 450 °C for 5 h for affording 270 g of ion exchanged zeolite beta.

267 g of the zeolite beta product obtained from the first ion exchange step and 265.3 g of ammonium nitrate were then placed in a 5 L beaker and suspended in 2 kg of distilled water. The suspension was then transferred to a 4 L round bottom flask and the initial receptacle rinsed with 650 mL of distilled water. The resulting mixture was then heated to 80 °C and kept at this temperature under continuous stirring for 2h. The solid was filtered off and the filter cake was then dried for 3 h at 120 °C and then calcined at 450 °C for 5 h for affording 234.2 g of ion exchanged zeolite beta.

233.4 g of the zeolite beta product obtained from the second ion exchange step and 233 g of ammonium nitrate were then placed in a 5 L beaker and suspended in 1.8 kg of distilled water. The suspension was then transferred to a 4 L round bottom flask and the initial receptacle rinsed with 550 mL of distilled water. The resulting mixture was then heated to 80 °C and kept at this temperature under continuous stirring for 2h. The solid was filtered off and the filter cake was then dried for 3 h at 120 °C and then calcined at 450 °C for 5 h for affording zeolite beta in its H-form.

Elemental analysis of the product afforded: 4.9 wt.-% Al, 0.05 wt.-% Na, and 34 wt.-% Si.

### Example 1: Synthesis of Cu/Ni/Sn intermetallic phases on zeolite beta in the H-form as obtained from organotemplate-free synthesis ("Cu/Ni/Sn@(H)OTF_BEA")

16.82 mmol of Cu(NO₃)₂ · 2.5 H₂O, 11.36 mmol of Ni(NO₃)₂ · 6H₂O, and 4.37 mmol of SnCl₂ · 2 H₂O were dissolved in 150 ml methanol. A round bottom flask containing the solution was placed in an ultrasonic bath and treated for 30 min. 6.3 g of zeolite beta in the H-form as obtained from Reference Example 1 and 100 ml methanol were supplied to another round bottom flask and stirred for 30 min. The precursor solution was added to the zeolite suspension and stirred for 30 min at room temperature. Then, the methanol was removed in a rotary evaporator with the water bath temperature adjusted to 50 °C. The residue was dried at room temperature for 18 h. The solid was ground to a powder and filled into a vertically arranged flow-type quartz reactor. The reactor was thoroughly purged with nitrogen (100 ml/min) for 10 min at room temperature. The powder was then reduced in a mixture of flowing hydrogen and nitrogen (100 ml/min hydrogen and 100 ml/min nitrogen) at 800 °C. The maximum temperature was achieved at a heating rate of 10 K/min and kept constant for 3 h. Finally, the sample was cooled to room temperature.

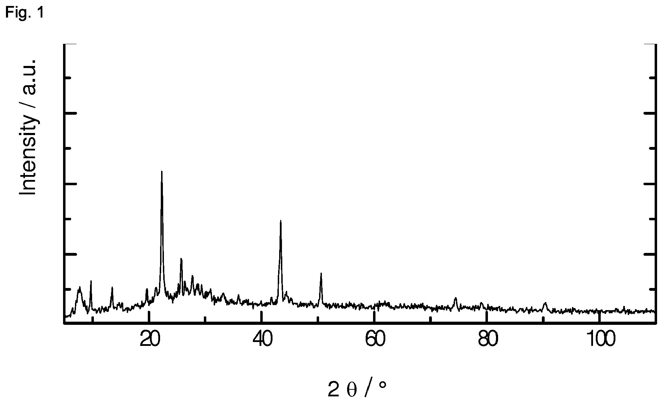

The X-ray diffraction pattern of Cu/Ni/Sn@(H)OTF_BEA for the angle range 2theta = 10 - 110 ° is shown in figure 1. The sharp reflections between 2theta = 5 - 40 ° are caused by crystalline zeolite support. The characteristic signals for the L2₁ phase are observed at 25.9 °, 30.1 °, 42.9 °, 62.4 ° and 78.9 °. However, it cannot undoubtedly be differentiated between Cu₂NiSn or Cu-Ni₂Sn by X-ray powder diffraction.

Elemental analysis of Cu/Ni/Sn@(H)OTF_BEA afforded: 6.0 wt.-% Al, 4.0 wt.-% Cu, 2.0 wt.-% Ni, 33 wt.-% Si, and 3.8 wt.-% Sn.

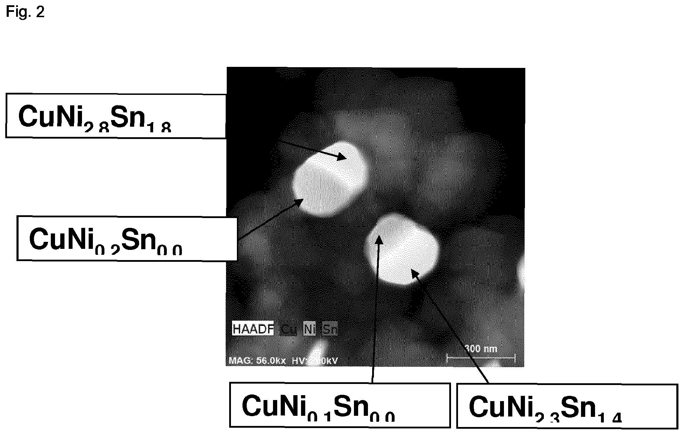

HAADF-STEM/EDX images of a sample of the Cu/Ni/Sn@(H)OTF_BEA product are shown in figure 2, wherein the Janus particles may be discerned, and wherein the composition of their different phases as obtained from the EDX measurement is accordingly indicated. Accordingly, as may be taken from the results, the phase of the Janus particles corresponding to a ternary intermetallic compound may tentatively be attributed to constitute a CuNi₂Sn phase.

### Reference Example 2: Synthesis of boron-zeolite beta

209 kg de-ionized water were provided in a vessel. Under stirring at 120 rpm (rounds per minute), 355 kg tetraethylammonium hydroxide were added and the suspension was stirred for 10 minutes at room temperature. Thereafter, 61 kg boric acid were suspended in the water and the suspension was stirred for another 30 minutes at room temperature. Subsequently, 555 kg Ludox® AS-40 were added, and the resulting mixture was stirred at 70 rpm for another hour at room temperature. The liquid gel had a pH of 11.8 as determined via measurement with a pH electrode. The finally obtained mixture was transferred to a crystallization vessel and heated to 160 °C within 6 h under a pressure of 7.2 bar and under stirring (140 rpm). Subsequently, the mixture was cooled to room temperature. The mixture was again heated to 160 °C within 6 h and stirred at 140 rpm for additional 55 h. The mixture was cooled to room temperature and subsequently, the mixture was heated for additional 45 h at a temperature of 160 °C under stirring at 140 rpm. 7800 kg de ionized water were added to 380 kg of this suspension. The suspension was stirred at 70 rpm and 100 kg of a 10 weight-% HNO₃ aqueous solution was added. From this suspension the boron containing zeolitic material having a BEA framework structure was separated by filtration. The filter cake was then washed with de-ionized water at room temperature until the washing water had a conductivity of less than 150 microSiemens/cm. The thus obtained filter cake was subjected to pre-drying in a nitrogen stream.

The thus obtained zeolitic material was subjected, after having prepared an aqueous suspension having a solids content of 15 weight-%, based on the total weight of the suspension, using de-ionized water, to spray-drying in a spray-tower with the following spray-drying conditions:

| | |
|---|---|
| drying gas, nozzle gas: | technical nitrogen |
| temperature drying gas: | |
| - temperature spray tower (in): | 235 °C |
| - temperature spray tower (out): | 140 °C |
| nozzle: | |
| - top-component nozzle | supplier Gerig; size 0 |
| - nozzle gas temperature: | room temperature |
| - nozzle gas pressure: | 1 bar |
| operation mode: | nitrogen straight |
| apparatus used: | spray tower with one nozzle |
| configuration: | spray tower - filter - scrubber |
| gas flow: | 1,500 kg/h |
| filter material: | Nomex® needle-felt 20 m² |
| dosage via flexible tube pump: | SP VF 15 (supplier: Verder) |

The spray tower was comprised of a vertically arranged cylinder having a length of 2,650 mm, a diameter of 1,200 mm, which cylinder was conically narrowed at the bottom. The length of the conus was 600 mm. At the head of the cylinder, the atomizing means (a two-component nozzle) were arranged. The spray-dried material was separated from the drying gas in a filter downstream of the spray tower, and the drying gas was then passed through a scrubber. The suspension was passed through the inner opening of the nozzle, and the nozzle gas was passed through the ring-shaped slit encircling the opening.

The spray-dried material was then subjected to calcination at 500 °C for 5 h. The calcined material had a B₂O₃ : SiO₂ molar ratio of 0.045, a total carbon content of (TOC) 0.08 weight-%, a crystallinity determined by XRD of 56 %, and a BET specific surface area determined by DIN 66131 of 498 m²/g.

### Example 2: Synthesis of Cu/Ni/Sn intermetallic phases on boron-zeolite beta ("Cu/Ni/Sn@B-BEA")

The synthetic procedure of example 1 was repeated with 16.58 mmol of Cu(NO₃)₂ · 2.5 H₂O, 11.19 mmol of Ni(NO₃)₂ · 6 H₂O, and 4.30 mmol of SnCl₂ · 2 H₂O, using 6.21 g of boron-zeolite beta as obtained from Reference Example 2 as the zeolite support.

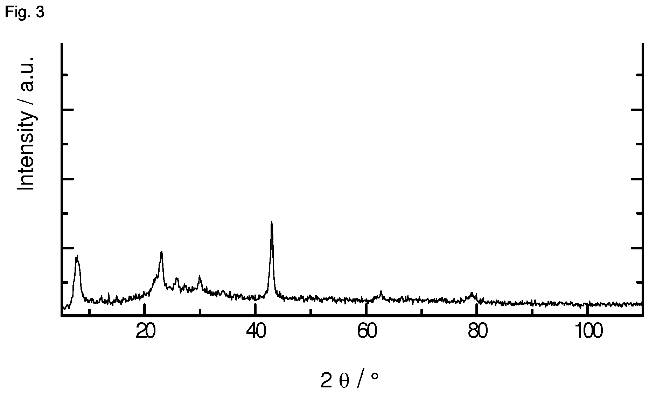

The X-ray diffraction pattern of Cu/Ni/Sn@B-BEA for the angle range 2theta = 10 - 110 ° is shown in figure 3. The sharp reflections between 2theta = 5 - 25 ° are caused by crystalline zeolite support. The characteristic signals for the L2₁ phase are observed at 25.9 °, 30.1 °, 42.9 °, 62.4 ° and 78.9 °. However, it cannot undoubtedly be differentiated between Cu₂NiSn or Cu-Ni₂Sn by X-ray powder diffraction.

Elemental analysis of Cu/Ni/Sn@(H)OTF_BEA afforded: 0.59 wt.-% B, 4.1 wt.-% Cu, 1.0 wt.-% Ni, 41 wt.-% Si, and 3.7 wt.-% Sn.

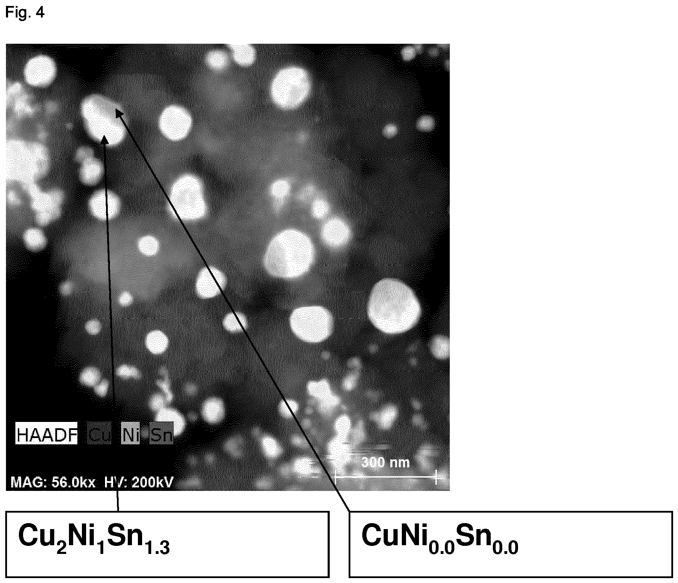

HAADF-STEM/EDX images of a sample of the Cu/Ni/Sn@B-BEA product are shown in figure 4, wherein the Janus particles may be discerned, and wherein the composition of their different phases as obtained from the EDX measurement is accordingly indicated. Accordingly, as may be taken from the results, the phase of the Janus particles corresponding to a ternary intermetallic compound may tentatively be attributed to constitute a Cu₂NiSn phase.

### Reference Example 3: Preparation of a Zeolitic Material having the CHA Framework Structure using Trimethylcyclohexylammonium and Tetramethylammonium

692.01 g *N,N,N*-trimethylcyclohexylammonium hydroxide (20 wt-% solution in H₂O) were mixed with 56.54 g of aluminiumtriisopropylate and 150.62 g tetramethylammonium hydroxide (25 wt-% solution in H₂O). Afterwards, 692.01 g of colloidal silica (LUDOX AS 40; 40 wt.-% colloidal solution in H₂O) and 11g of chabazite as seed crystals were added to the stirred mixture. The resulting gel was placed in a stirred autoclave with a total volume of 2.5 L. The autoclave was heated within 7h to 170°C. The temperature was kept constant for 30h. Afterwards the autoclave was cooled down to room temperature. Then, the solids were separated by filtration and intensive washing with distilled water until the wash-water had a pH of 7. Finally the solid was dried for 10 hours at 120°C to afford 308 g of product which was then calcined at 550°C for 5h under air.

The characterization of the material via XRD confirmed the CHA-type framework structure of the product and afforded an average crystal size of 117 nm and a crystallinity of 88%. The material displayed a BET surface area of 630 m²/g. The elemental analysis prior to calcination showed 36 wt-% Si, 2.2 wt-% Al, 11.8 wt-% C, 1.6 wt.-% N and 0.07 wt-% Na in the sample, thus affording an SiO₂ : Al₂O₃ atomic ratio (SAR) of 31.

The particle size distribution of the calcined sample afforded a D10 value of 1.4 µm, a D50 value of 1.89 µm, and a D90 value of 2.58 µm.

The ²⁹Si MAS NMR of the zeolitic material displays peaks at -103.8 and -110.2 ppm, wherein the integration of the peaks offers relative intensities of 0.397 and 1 for the signals, respectively. The ²⁷Al MAS NMR of the zeolitic material displays peaks at 58.3 and -0.7 ppm, wherein the integration of the peaks offers relative intensities of 1 and 0.112 for the signals, respectively.

### Example 3: Synthesis of Cu/Ni/Sn intermetallic phases on chabazite in the H-form ("Cu/Ni/Sn@(H)CHA")

The synthetic procedure of example 1 was repeated with 16.78 mmol of Cu(NO₃)₂ · 2.5 H₂O, 11.33 mmol of Ni(NO₃)₂ · 6 H₂O, and 4.35 mmol of SnCl₂ · 2 H₂O, using 6.28 g of chabazite in the H-form as obtained from Reference Example 3 as the zeolite support.

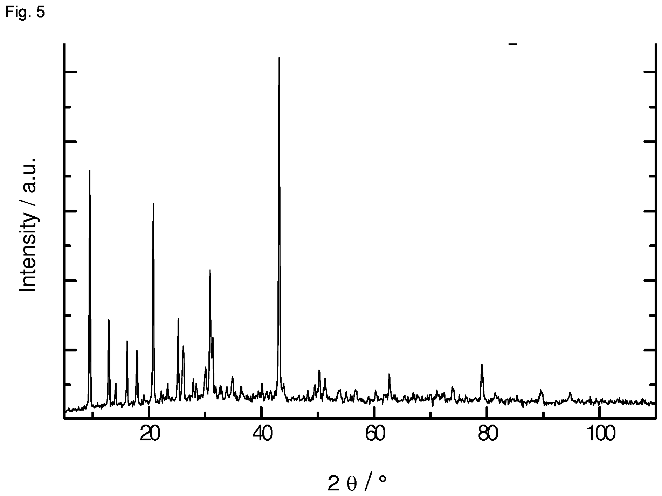

The X-ray diffraction pattern of Cu/Ni/Sn@(H)CHA for the angle range 2theta = 10 - 110 ° is shown in figure 5. The sharp reflections between 2theta = 5 - 50 ° are caused by crystalline zeolite support. The characteristic signals for the L2₁ phase are observed at 25.9 °, 30.1 °, 42.9 °, 62.4 ° and 78.9 °. However, it cannot undoubtedly be differentiated between Cu₂NiSn or Cu-Ni₂Sn by X-ray powder diffraction.

Elemental analysis of Cu/Ni/Sn@(H)CHA afforded: 2.8 wt.-% Al, 3.6 wt.-% Cu, 1.4 wt.-% Ni, 37 wt.-% Si, and 4.2 wt.-% Sn.

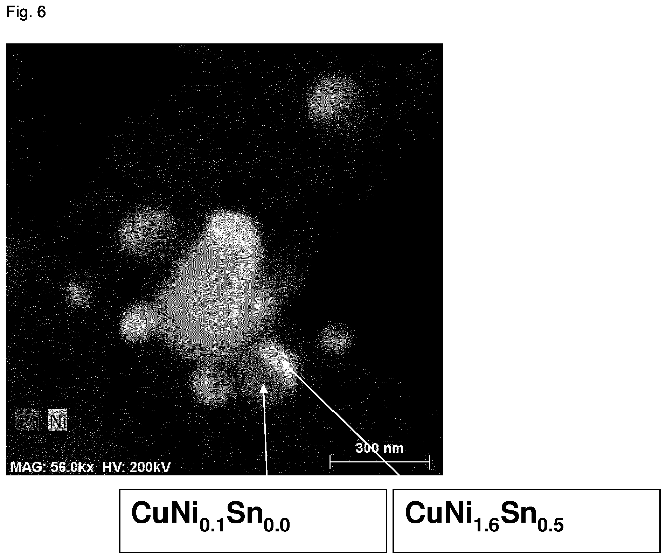

HAADF-STEM/EDX images of a sample of the Cu/Ni/Sn@(H)CHA product are shown in figure 6, wherein the Janus particles may be discerned, and wherein the composition of their different phases as obtained from the EDX measurement is accordingly indicated. Accordingly, as may be taken from the results, the phase of the Janus particles corresponding to a ternary intermetallic compound may tentatively be attributed to constitute a CuNi₂Sn phase.

### Reference Example 4: Preparation of Cu-CHA

A portion zeolitic material having the CHA type framework structure obtained according to Reference Example 3 was ion-exchanged with ammonium and copper for obtaining a zeolitic material having the CHA-type framework structure with a copper loading of 2.3 wt.-% based on the total weight of the exchanged zeolite.

### Example 4: Synthesis of Cu/Ni/Sn intermetallic phases on copper chabazite ("Cu/Ni/Sn@(Cu)CHA")

The synthetic procedure of example 1 was repeated with 15.50 mmol of Cu(NO₃)₂ · 2.5 H₂O, 10.49 mmol of Ni(NO₃)₂ · 6 H₂O, and 4.03 mmol of SnCl₂ · 2 H₂O, using 5.86 g of copper chabazite as the zeolite support.

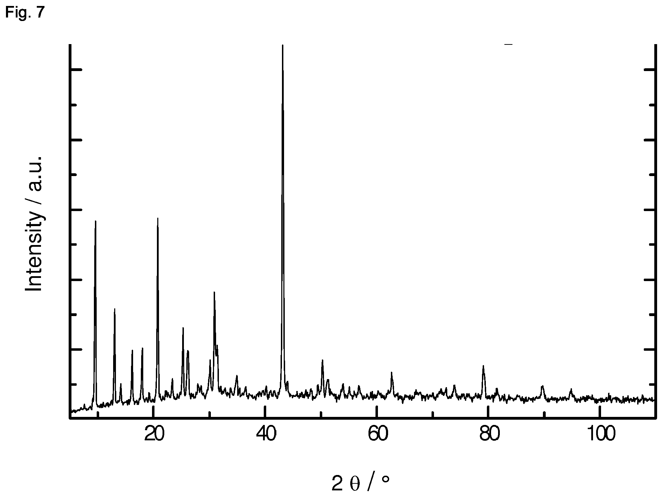

The X-ray diffraction pattern of Cu/Ni/Sn@(Cu)CHA for the angle range 2theta = 10 - 110 ° is shown in figure 7. The sharp reflections between 2theta = 5 - 50 ° are caused by crystalline zeolite support. The characteristic signals for the L21 phase are observed at 25.9 °, 30.1 °, 42.9 °, 62.4 ° and 78.9 °. However, it cannot undoubtedly be differentiated between Cu₂NiSn or Cu-Ni₂Sn by X-ray powder diffraction.

Elemental analysis of Cu/Ni/Sn@(Cu)CHA afforded: 2.7 wt.-% Al, 6.3 wt.-% Cu, 1.7 wt.-% Ni, 34 wt.-% Si, and 4.1 wt.-% Sn.

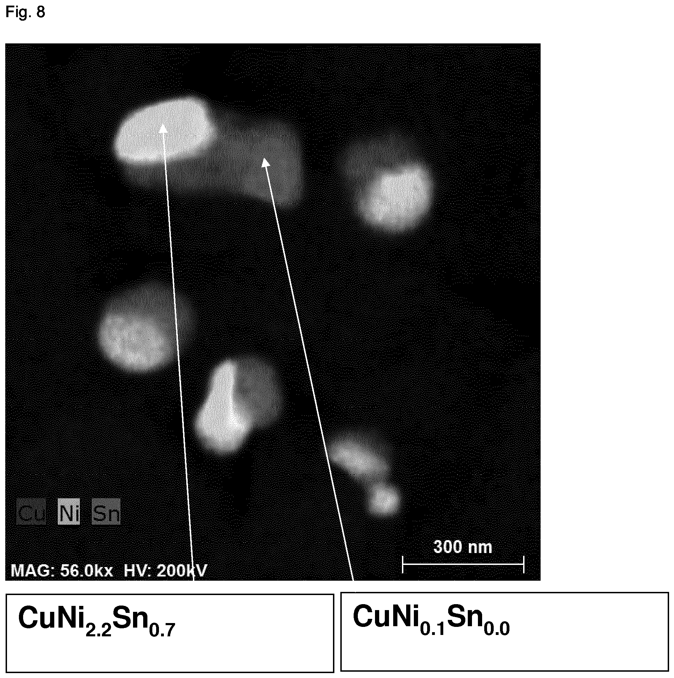

HAADF-STEM/EDX images of a sample of the Cu/Ni/Sn@(Cu)CHA product are shown in figure 8, wherein the Janus particles may be discerned, and wherein the composition of their different phases as obtained from the EDX measurement is accordingly indicated. Accordingly, as may be taken from the results, the phase of the Janus particles corresponding to a ternary intermetallic compound may tentatively be attributed to constitute a CuNi₂Sn phase.

### Reference Example 5: Preparation of a tin-containing zeolitic material having a BEA framework structure

### 5.1 Preparing a boron-containing zeolitic material having a BEA frame work structure

209 kg de-ionized water were provided in a vessel. Under stirring at 120 rpm (rounds per minute), 355 kg tetraethylammonium hydroxide were added and the suspension was stirred for 10 minutes at room temperature. Thereafter, 61 kg boric acid were suspended in the water and the suspension was stirred for another 30 minutes at room temperature. Subsequently, 555 kg Ludox® AS-40 were added, and the resulting mixture was stirred at 70 rpm for another hour at room temperature. The liquid gel had a pH of 11.8 as determined via measurement with a pH electrode. The finally obtained mixture was transferred to a crystallization vessel and heated to 160 °C within 6 h under a pressure of 7.2 bar and under stirring (140 rpm). Subsequently, the mixture was cooled to room temperature. The mixture was again heated to 160 °C within 6 h and stirred at 140 rpm for additional 55 h. The mixture was cooled to room temperature and subsequently, the mixture was heated for additional 45 h at a temperature of 160 °C under stirring at 140 rpm. 7800 kg de ionized water were added to 380 kg of this suspension. The suspension was stirred at 70 rpm and 100 kg of a 10 weight-% HNO₃ aqueous solution was added. From this suspension the boron containing zeolitic material having a BEA framework structure was separated by filtration. The filter cake was then washed with de-ionized water at room temperature until the washing water had a conductivity of less than 150 microSiemens/cm. The thus obtained filter cake was subjected to pre-drying in a nitrogen stream.

The thus obtained zeolitic material was subjected, after having prepared an aqueous suspension having a solids content of 15 weight-%, based on the total weight of the suspension, using de-ionized water, to spray-drying in a spray-tower with the following spray-drying conditions:

| | |
|---|---|
| drying gas, nozzle gas: | technical nitrogen |
| temperature drying gas: | |
| - temperature spray tower (in): | 235 °C |
| - temperature spray tower (out): | 140 °C |
| nozzle: | |
| - top-component nozzle | supplier Gerig; size 0 |
| - nozzle gas temperature: | room temperature |
| - nozzle gas pressure: | 1 bar |
| operation mode: | nitrogen straight |
| apparatus used: | spray tower with one nozzle |
| configuration: | spray tower - filter - scrubber |
| gas flow: | 1,500 kg/h |
| filter material: | Nomex® needle-felt 20 m² |
| dosage via flexible tube pump: | SP VF 15 (supplier: Verder) |

The spray tower was comprised of a vertically arranged cylinder having a length of 2,650 mm, a diameter of 1,200 mm, which cylinder was conically narrowed at the bottom. The length of the conus was 600 mm. At the head of the cylinder, the atomizing means (a two-component nozzle) were arranged. The spray-dried material was separated from the drying gas in a filter downstream of the spray tower, and the drying gas was then passed through a scrubber. The suspension was passed through the inner opening of the nozzle, and the nozzle gas was passed through the ring-shaped slit encircling the opening.

The spray-dried material was then subjected to calcination at 500 °C for 5 h. The calcined material had a B₂O₃ : SiO₂ molar ratio of 0.045, a total carbon content of (TOC) 0.08 weight-%, a crystallinity determined by XRD of 56 %, and a BET specific surface area determined by DIN 66131 of 498 m²/g.

### 5.2 Deboronation - forming vacant tetrahedral sites

840 kg de-ionized water were provided in a vessel equipped with a reflux condenser. Under stirring at 40 rpm, 28 kg of the spray-dried and calcined zeolitic material described above in 5.1 were employed. Subsequently, the vessel was closed and the reflux condenser put into operation. The stirring rate was increased to 70 rpm. Under stirring at 70 rpm, the content of the vessel was heated to 100 °C within 1 h and kept at this temperature for 20 h. Then, the content of the vessel was cooled to a temperature of less than 50 °C. The resulting deboronated zeolitic material having a BEA framework structure was separated from the suspension by filtration under a nitrogen pressure of 2.5 bar and washed four times with deionized water at room temperature. After the filtration, the filter cake was dried in a nitrogen stream for 6 h.

The obtained deboronated zeolitic material was subjected, after having re-suspended the zeolitic material in de-ionized water, to spray-drying under the conditions as described in 5.1. The solid content of the aqueous suspension was 15 weight-%, based on the total weight of the suspension. The obtained zeolitic material had a B₂O₃ : SiO₂ molar ratio of less than 0.002, a water uptake of 15 weight-%, a crystallinity determined by XRD of 48 % and a BET specific surface area determined by DIN 66131 of 489 m²/g.

### 5.3 Isomorphous substitution with tin

100 g of the deboronated zeolitic material having a BEA framework structure as obtained under 5.2 were then added to a mixer (mill type Microton MB550) together with 8.32 g of tin(II) acetate (Sn(OAc)₂ [CAS-Nr:638-39-1]), and the mixture was milled for 15 minutes with 14,000 r.p.m. (rounds per minute). After the milling, the mixture was transferred to a porcelain basket and calcined in air at 500 °C for 3 h, with a heating ramp of 2 K / min for obtaining 92.7 of zeolite beta isomorphously substituted with tin.

### Example 5: Synthesis of Cu/Ni/Sn intermetallic phases on Sn-zeolite beta as obtained from organotemplate-free synthesis ("Cu/Ni/Sn@Sn-BEA")

The synthetic procedure of example 1 was repeated with 14.82 mmol of Cu(NO₃)₂ · 2.5 H₂O, 10.01 mmol of Ni(NO₃)₂ · 6 H₂O, and 3.84 mmol of SnCl₂ · 2 H₂O, using 5.86 g of tin-zeolite beta as obtained from Reference Example 5 as the zeolite support.

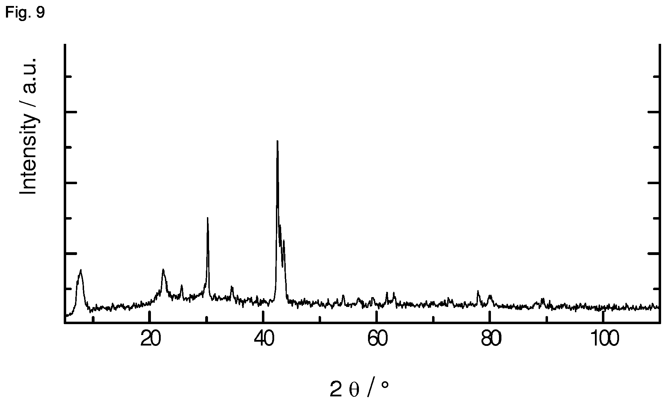

The X-ray diffraction pattern of Cu/Ni/Sn@Sn-BEA for the angle range 2theta = 10 - 110 ° is shown in figure 9. The sharp reflections between 2theta = 5 - 40 ° are caused by crystalline zeolite support. The characteristic signals for the L21 phase are observed at 25.9 °, 30.1 °, 42.9 °, 62.4 ° and 78.9 °. However, it cannot undoubtedly be differentiated between Cu₂NiSn or Cu-Ni₂Sn by X-ray powder diffraction.

Elemental analysis of Cu/Ni/Sn@Sn-BEA afforded: < 0.03 wt.-% Al, 4.0 wt.-% Cu, 1.6 wt.-% Ni, 38 wt.-% Si, and 7.9 wt.-% Sn.

### Example 6: SCR catalyst testing

The ternary intermetallic compounds respectively loaded on a zeolite as obtained from examples 1 to 6, were respectively shaped by preparing an aqueous slurry of the respective material to which a pre-milled alumina slurry was added in a ratio of 70 wt.-% intermetallic compound loaded on zeolite and 30 wt.-% alumina. The slurry was then dried under stirring and calcined for 1 h at 550 °C. The respectively obtained material was then crushed and sieved to a particle size in the range of from 250 to 500 micrometer. The catalyst was then aged for 50 h at 650 °C in 10 % steam / air, and for 16 h at 800 °C in 10 % steam / air. Standard SCR conditions were applied by subjecting the catalytic material to a gas stream (500 ppm NO, 500 ppm NH₃, 5 % H₂O, 10 % O₂, balance N₂) at a gas hourly space velocity of 80,000 h⁻¹, at temperatures of the gas stream of 200 °C, 400 °C, 575 °C (first run for degreening); and 175 °C, 200 °C, 225 °C, 250 °C, 300 °C, 450 °C, 550 °C, 575 °C. The amount of the catalytic material was adjusted to 120 mg per reactor; the material was diluted with corundum to about 1 ml volume. The space velocities simulated 1 mL of a coated catalyst.

The results of the SCR tests are shown in figures 12 to 13. More specifically, both figures show the results depending on the temperature of the catalyst testing for the fresh catalyst (●) for the material aged for 50 h at 650°C (◆) and for the material aged for 16 h at 800°C (▼). Thus, as may be taken from the results from SCR testing, the inventive materials display excellent NOₓ conversion in SCR.

### Cited Prio Art:

- Hedin et al. in Z. physik. Chem. 1935, B30 280-288
- WO 2017/029165 A1
- WO 2018/16270 A1
- Senanayake et al. "Exploring Heusler alloys as catalysts for ammonia dissociation", August 2016, ISBN: 978-1-369-00770-1

## Claims

1. A catalyst comprising particles of a ternary intermetallic compound of the following formula (I):
CuNiₐZ_{b} (I)
wherein 0 < a ≤ 2, and 0 < b ≤ 1, and wherein Z is selected from the group consisting of Al, Si, Ga, Ge, In, Sn, and Sb, including mixtures of two or more thereof;
wherein at least part of the particles comprise two or more phases, wherein one of the phases has the composition according to the following formula (II)
CuₓNi_{y}Z_{z} (II)
wherein x + y + z = 1, and
wherein x ranges from 0.06 to 0.8;
y ranges from 0.05 to 0.75; and
z ranges from 0.05 to 0.43;
wherein the particles of the ternary intermetallic compound are supported on a zeolitic material.

2. The catalyst of claim 1, wherein Z is selected from the group consisting of Al, Si, Ga, In, and Sn, including mixtures of two or more thereof.

3. The catalyst of claim 1 or 2, wherein at least part of the particles comprises a CuNi₂Sn phase.

4. The catalyst of claim 1 or 2, wherein at least part of the particles comprises a Cu₂NiSn phase.

5. The catalyst of any of claims 1 to 4, wherein at least part of or all of the particles comprising two or more phases including a phase according to the formula (II) comprise a further phase having the composition according to the following formula (III)
Cu_{1-c}Ni_{0+c} (III)
wherein c ranges from 0.001 to 0.25.

6. The catalyst of any of claims 1 to 5, wherein the framework of the zeolitic material comprises YO₂, wherein Y is Si and Sn.

7. The catalyst of any of claims 1 to 5, wherein the framework of the zeolitic material comprises SiO₂ and X₂O₃, wherein X is a trivalent element selected from the group consisting of Al, B, In, Ga, and mixtures of two or more thereof.

8. The catalyst of any of claims 1 to 7, wherein the zeolitic material has a CHA-type framework structure.

9. The catalyst of any of claims 1 to 7, wherein the zeolitic material has an AEI-type framework structure.

10. The catalyst of any of claims 1 to 7, wherein the zeolitic material has a BEA-type framework structure.

11. The catalyst of any of claims 1 to 10, wherein the zeolitic material is obtained and/or obtainable from organotemplate-free synthesis.

12. The catalyst of any of claims 1 to 11, wherein the intermetallic compound according to formula (I) and/or (II) is a Heusler phase.

13. Method for the preparation of a catalyst comprising particles of a ternary intermetallic compound comprising:
(1) providing a solution containing one or more precursor compounds for Cu, one or more precursor compounds for Ni, one or more precursor compounds for Z, and one or more solvents;
(2) providing a suspension containing a zeolitic material and one or more solvents;
(3) adding the solution provided in (1) to the suspension provided in (2);
(4) evaporating the mixture obtained in (3) to dryness; and
(5) heating the mixture obtained in (4) in a hydrogen containing atmosphere;
wherein Z is selected from the group consisting of Al, Si, Ga, Ge, In, Sn, and Sb, including mixtures of two or more thereof.

14. A catalyst obtained and/or obtainable according to the process of claim 13.

15. Use of a catalyst according to any of claims 1 to 12 and 14 for the selective catalytic reduction (SCR) of nitrogen oxides NOₓ; for the storage and/or adsorption of CO₂; for the oxidation of NH₃, in particular for the oxidation of NH₃ slip in diesel systems; for the decomposition of N₂O; as an additive in fluid catalytic cracking (FCC) processes; and/or as a catalyst in organic conversion reactions.
